# EUROPEAN PATENT SPECIFICATION

(11) **EP 1 026 874 B1**
(45) Date of publication and mention of the grant of the patent: **29.09.2004**
(21) Application number: 99400230.1
(22) Date of filing: 02.02.1999
(51) Int. Cl.: H04M 19/00, H04M 3/18, H04Q 11/04, H04M 1/74, H02H 5/04, H02H 11/00

(54) **Arrangement and method to feed in power to a plurality of circuits or telecommunication lines**
Vorrichtung und Verfahren zur Stromzuführung zu einer Mehrzahl von Schaltkreisen
Dispositif et méthode pour fournir alimentation à une pluralité de circuits

(43) Date of publication of application: 09.08.2000
(73) Proprietor: ALCATEL, 75008 Paris (FR)
(72) Inventor: Verkinderen, Johan Gabriel August, 9000 Gent (BE); Wingerath, Norbert Heinz, 71701 Schwieberdingen (DE)
(74) Representative: Narmon, Gisèle Marie Thérèse

(56) References cited:
- US-A- 4 856 059
- US-A- 4 983 955
- US-A- 5 089 927

## Description

The present invention relates to a power feed control arrangement associated to a plurality of circuits to be fed in power, said arrangement comprising a plurality of power feeders each adapted to couple a power supply to a distinct one of said circuits under control of a power request signal received at a power request input of said arrangement.

Such a power feed control arrangement is already known in the art, e.g. a "Quad Line Feed Controller" (QLFC) adapted to feed four circuits for supplying ISDN telecommunication lines, the four circuits being integrated in a single electronic chip. The operation of such a known arrangement is controlled by relatively sophisticated software programs to prevent, amongst other, damages on the circuits when unwanted conditions, such as high temperature operation and/or over-currents, are reached. The STLC5444 line feeder from the company ST™ is for instance such an arrangement that is limited to relative low supply voltages, e.g. of about 40V corresponding to the S and the T interface of ISDN lines. Another problem with the known arrangement is that it implies regular adaptations of the software for any change, e.g. on the hardware, of the circuits.

US Patent 5 089 927 discloses a power feed circuit for digital communication terminal equipment.

An object of the present invention is to provide a power feed control arrangement of the above known type but adapted to feed several circuits while performing autonomously the operation management.

According to the invention, this object is achieved due to the fact that said power feed control arrangement further includes:
- a temperature sensor adapted to sense the temperature of the circuits and to accordingly supply a temperature control signal;
- a plurality of over-current sensors, each coupled to a distinct one of said circuits and adapted to sense an over-current flowing through said circuit and to accordingly supply an over-current control signal; and
- a power feed controller having said power request inputs for receiving said power request signals, a temperature control input connected
to said temperature sensor for receiving said temperature control signal, a plurality of over-current control inputs connected to said over-current sensors for receiving the over-current control signals, and a plurality of power request outputs connected to said power feeders for transmitting power control signals thereto,

In this way, the power feed controller not only receives the power requests but also collects information concerning the temperature of the circuits and the possible over-currents flowing there through. It may then control the different power feeders accordingly. Since the present power feed control arrangement operates autonomously, it may accept supply voltages up to about 110V as for the U-interface of ISDN telecommunication lines.

Another characteristic feature of the present arrangement is that said temperature sensor is adapted to detect a first, a second and a third predetermined temperature corresponding a first, a second and a third value of said temperature control signal.

Different temperature regions, each corresponding to a different behavior of the arrangement, may so be defined. The power feed of the circuits may then be accurately and suitably controlled.

The present invention also relates to a method to feed in power a plurality of circuits each associated to a power feeder adapted to couple a power supply to its associated circuit under the control of a power request signal, the circuits being fed in sequence when several power request signals are simultaneously supplied.

It is known, e.g. from the software of the above "Quad Line Feed Controller" (QLFC) that the circuits are preferably powered-up in sequence in order to avoid an over-temperature and possible over-currents. Here again, the software needs to be adapted to the particularities of the circuits to be powered-up.

Another object of the present invention is to provide a method to feed in power a plurality of circuits but which is independent of the type of circuits and which operates autonomously.

According to the invention, this object is achieved due to the fact that the temperature of the circuits is sensed and is used to control the operation of said power feeders, and that any over-current flowing through said circuits is sensed and is used to further control said power feeders.

In this way, not only the power-up operation, but also the normal operation is autonomous because it is controlled by the parameters sensed on the circuits.

In more detail, if a power request signal is received for a circuit when the sensed temperature is below a first predetermined temperature value, the power feeder associated to said circuit and corresponding to the received power request signal couples said power supply thereto.

On the other hand, if a plurality of power request signals are received for the circuits when the sensed temperature is below a first predetermined temperature value, the power feeders associated to the circuits and corresponding to the received power request signals couple said power supply to said circuits, said circuits being then coupled to said power supply in a predetermined sequence.

In such a case of simultaneous power request signals being supplied, the start-up sequence is performed independently of the type of circuits.

Preferably, said predetermined sequence is given by a priority list.

The present method is also characterized in that if a power request signal is received for a circuit when the sensed temperature is between said first predetermined temperature value and a second predetermined temperature value, that is higher than said first predetermined temperature value, said power request signal is ignored whereby said power supply is not coupled to the circuit corresponding to the received power request signal.

This prevents to damage the circuits and the arrangement by a further increase of the temperature. However, the power supply remains coupled to those circuits already powered before.

Also another characteristic feature of the present method is that if a power request signal is received for a circuit when the sensed temperature is between said second predetermined temperature value and a third predetermined temperature value, that is higher than said second predetermined temperature value, said power request signal is ignored whereby said power supply is not coupled to the circuit corresponding to the received power request signal, and the circuits for which an over-current is sensed are disconnected from said power supply under the control of their associated power feeder.

Even if these circuits are already powered, the power feeders thereof disconnect the power supply when the current is too high.

Yet another characteristic feature of the present method is that if the sensed temperature is higher than said third predetermined temperature value, any power request signal is ignored and all the circuits are disconnected from said power supply under the control of their associated power feeder.

To prevent accidents, all the circuits are unconditionally disconnected from the power supply when the temperature exceeds this third predetermined value corresponding to a high security level.

Further characteristic features of the present arrangement and method are mentioned in the appended claims.

The above and other objects and features of the invention will become more apparent and the invention itself will be best understood by referring to the following description of an embodiment taken in conjunction with the accompanying drawings wherein:
FIG. 1 shows a power feed control arrangement and a plurality of associated circuits (TL0 to TL3) according to the invention; and
FIG. 2 represent time diagrams of power request signals (PF0-3) and status signals (NACK0 to NACK3) used in the arrangement of FIG. 1.

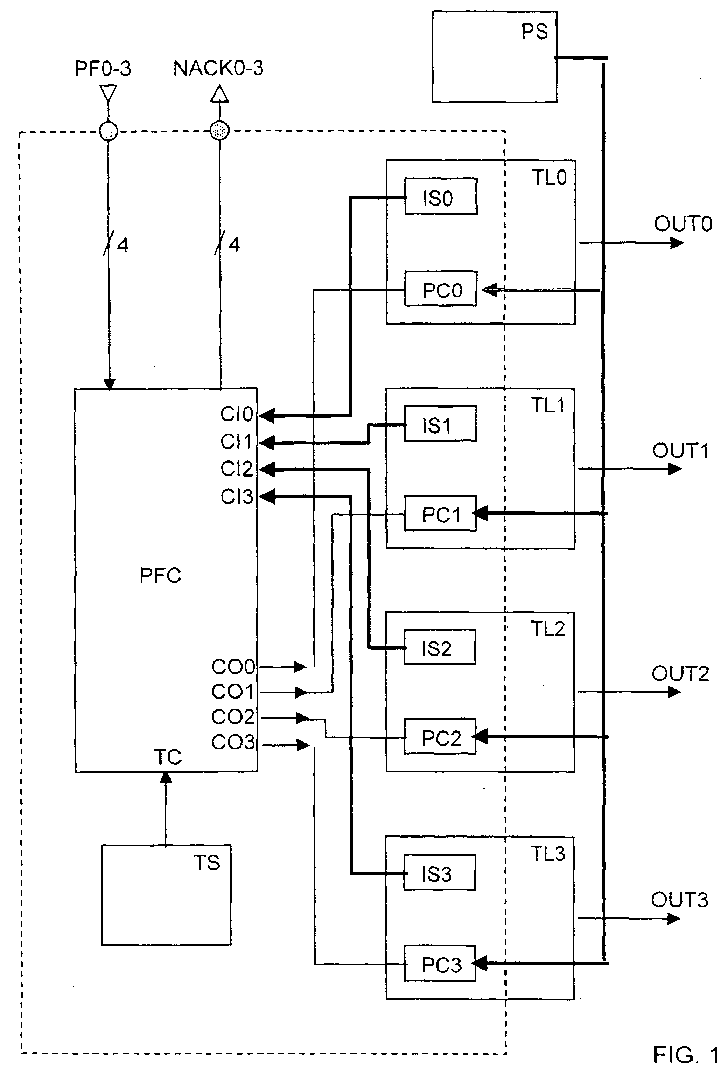

The power feed control arrangement shown in Fig. 1 is used for feeding in power several, generally 4, circuits TL0 to TL3 used here for supplying 4 U-interfaces of ISDN telecommunication lines via distinct outputs OUT0 to OUT3. The power feed control arrangement and the four circuits TL0 to TL3 are integrated in a single piece of silicon or electronic chip.

The arrangement comprises a power feed controller PFC as a central element to which are connected a temperature sensor TS and, associated to each of the circuits, distinct over-current sensors IS0 to IS3 and distinct power feeders PC0 to PC3.

In more detail, the temperature sensor TS senses the temperature of the chip and transmits a corresponding temperature control signal TC via a like-named temperature control input to the power feed controller PFC. As will be explained later, the sensed temperatures are grouped into four temperature regions each corresponding to a particular operation of the arrangement, i.e. to a particular behavior thereof. The temperature regions are: below 110°C, between 110°C and 130°C, between 130°C and 160°C, and above 160°C.

Each circuit TL0/3 includes or is associated to an over-current sensor IS0/3 able to measure current and more particularly any over-current flowing through the circuit, i.e. on the telecommunication line. The sensed over-current is transmitted to the power feed controller PFC as an over-current control signal CI0/3 via a like-named over-current control input.

Each circuit TL0/3 is also provided with a distinct power feeder PC0/3 which is adapted to couple a power supply PS to the associated circuit under control of a power control signal C0/3 received via a like-named power request output of the power feed controller PFC. Under this control, the power feeder PC0/3 applies or not the voltage received from the power supply PS to the associated circuit.

The power feed controller PFC further has power request inputs PF0 to PF3 through which it receives respective like-named power request signals indicating that a corresponding circuit needs to be fed in power.

Finally PFC has status outputs NACK0 to NACK3 where are provided like-named not-acknowledged or status signals indicative of the power status of the corresponding circuits TL0 to TL3, as will be explained below.

The power feed control arrangement operates as follows.

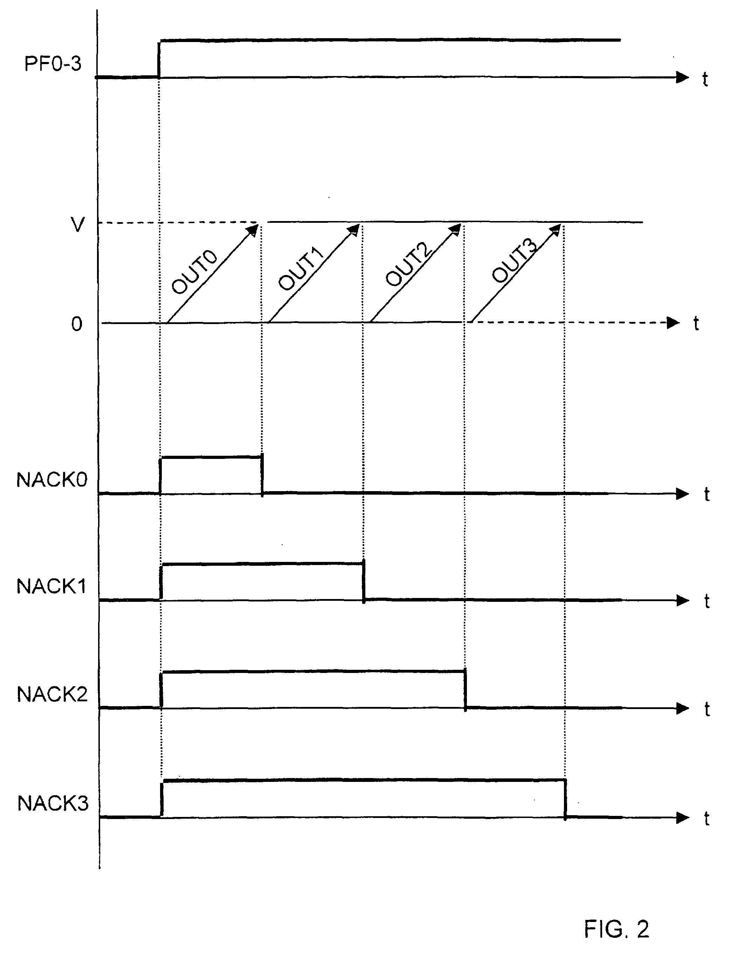

When a power request signal, say PF0, is raised at the like-named power request input of the power feed controller PFC, the controller knows that the circuit TL0 needs to be fed in power by the activation of its associated power feeder PC0. However, before to transmit a power control signal to the power feeder PC0 via the control output terminal CO0, PFC first immediately sets the status signal NACK0 to 1 at the status output NACK0. PFC then checks the information delivered by the temperature sensor TS and by the over-current sensors IS0 to IS3. If the temperature control signal TS has a first value corresponding to a temperature below 110°C and if the over-current control signal CI0 received from the over-current sensor indicates no over-current, the start-up process of the circuit TL0 may start. To this end, the power feed controller PFC transmits, via the power request output CO0, the power control signal for activating the power feeder PC0 whereby the circuit TL0 then receives power from the power supply PS. PFC resets the status signal NACK0 to 0 when the possible over-current condition due to the transient start-up operation has disappeared. The status signal NACK0 = 0 indicates that the power feeder PC0 is activated and that the corresponding circuit TL0 is fed in power by the power supply PS. The voltage at the output OUT0 is then raised from 0 to V as shown in Fig. 2.

Fig. 2 also represents the case where several power request signals PF0-3 are simultaneously received. In this case, the start-up process of the circuits TL0 to TL3 only starts if the temperature control signal TS has the first value corresponding to a temperature below 110°C. In order to avoid simultaneous power on, the power feed controller PFC then starts to activate the power feeders PC0-3 in sequence, preferably according to a predetermined priority list, say in the present example PC0 then PC1 then PC2 and finally PC3. This activation is performed by providing the power control signals CO0, CO1, CO2 and CO3 in the same order. The status signals NACK0 to NACK3, that were all set to 1 at the reception of the power request signals PF0-3, are reset in the same order as the power control signals CO0-3 when the outputs OUT0-3 of the circuits TL0-3 successively have reached the value V and when start-up over-currents have disappeared.

When a power request signal, say PF0, is received for the circuit TL0 but that the temperature sensor TS indicates a temperature that is between the first value of 110°C and a second value of 130°C, the power request signal PF0 is ignored by the power feed controller PFC. In other words, PFC refuses to activate the power feeder PC0, whatever the indication of the over-current sensor IS0. In this case, the status signal NACK0 is raised at the reception of the power request signal PF0 is maintained to 1 and the circuit TL0 is not fed in power. The signal NACK0 will only return to 0 when the temperature has dropped below the first value of 110°C and when the circuit TL0 is normally fed in power, i.e. when all over-currents have disappeared.

It is to be noted that power-on procedures started before the temperature range between 110°C and 130°C was entered, are not stopped.

When a power request signal, say PF0, is received for the circuit TL0 but that the temperature sensor TS indicates a temperature that is between the second value of 130°C and a third value of 160°C, the power request signal PF0 is ignored by the power feed controller PFC and all the circuits for which an over-current indication is given by the over-current control signal CI0/3 are disconnected from the power supply PS. These disconnection's or switch-off's are performed by the corresponding power feeders PC0/3 under control of the power feed controller PFC. To avoid oscillations, this status is latched by raising and maintaining the status signal NACK0/3 to 1.

Finally, in a worst case where the temperature sensor TS indicates a temperature that is higher than the third value of 160°C, any power request signal PF0/3 is ignored and all the circuits TL0-3 are disconnected from the power supply PS under the control of their associated power feeder PC0-3. This occurs whatever the other conditions of the circuits and in order to avoid damages to the circuitry.

Summarizing, the power feeders PC0/3 of the circuits TL0/3 are controlled by the power feed controller PFC upon reception of power request signals PF0-3 and in function of indications received from the temperature sensor TS as well as from over-current sensors TS0-3 associated to the circuits. A not-acknowledged or status signal NACK0/3, also provided by the power feed controller PFC, is set at the reception of a power request signal PF0/3 and is maintained until the output OUT0/3 of the circuit TL1/3 is effectively connected to the power supply PS and no over-current is detected.

While the principles of the invention have been described above in connection with specific apparatus, it is to be clearly understood that this description is made only by way of example and not as a limitation on the scope of the invention, as defined in the appended claims.

## Claims

1. Power feed control arrangement (PFC, TS, IS0-3, PC0-3) associated to a plurality of circuits (TL0-3) to be fed in power, said arrangement comprising a plurality of power feeders (PC0-3) each adapted to couple a power supply (PS) to a distinct one of said circuits under control of a power request signal received at a power request input (PF0/3) of said arrangement,
**characterized in that** said power feed control arrangement (PFC, TS, IS0-3, PC0-3) further includes:
- a temperature sensor (TS) adapted to sense the temperature of the circuits and to accordingly supply a temperature control signal;
- a plurality of over-current sensors (IS0-3), each coupled to a distinct one of said circuits and adapted to sense an over-current flowing through said circuit (TL0/3) and to accordingly supply an over-current control signal; and
- a power feed controller (PFC) having said power request inputs (PF0/3) for receiving said power request signals, a temperature control input (TC) connected to said temperature sensor (TS) for receiving said temperature control signal, a plurality of over-current control inputs (CI0-3) connected to said over-current sensors (IS0-3) for receiving the over-current control signals, and a plurality of power request outputs (CO0-3) connected to said power feeders (PC0-3) for transmitting power control signals thereto,
said power feed controller (PFC) being adapted to provide said power control signals to the corresponding power feeders under control of the power request signals, of the temperature control signal, and of the over-current control signals.

2. Power feed control arrangement according to claim 1, **characterized in that** said temperature sensor (TS) is adapted to detect a first (110°C), a second (130°C) and a third (160°C) predetermined temperature corresponding a first, a second and a third value of said temperature control signal.

3. Power feed control arrangement according to claim 1, **characterized in that** said power feed controller (PFC) has a plurality of status outputs (NACK0-3) at which are provided status signals indicative of the power status of corresponding ones of said circuits (TL0-3).

4. Power feed control arrangement according to claim 1, **characterized in that** said arrangement (PFC, TS, IS0-3, PC0-3) and said circuits (TL0-3) are integrated in a same electronic chip.

5. Method to feed in power a plurality of circuits (TL0-3) each associated to a power feeder (PC0/3) adapted to couple a power supply (PS) to its associated circuit (TL0/3) under the control of a power request signal (PF0/3), the circuits being fed in sequence when several power request signals are simultaneously supplied,
**characterized in that** the temperature of the circuits (TL0-3) is sensed (TS) and is used to control the operation of said power feeders (PC0-3),
and **in that** any over-current flowing through said circuits (TL0-3) is sensed (IS0-3) and is used to further control said power feeders.

6. Method according to claim 5, **characterized in that** if a power request signal (PF0/3) is received for a circuit (TL0/3) when the sensed temperature is below a first predetermined temperature value (110°C), the power feeder (PC0/3) associated to said circuit and corresponding to the received power request signal couples said power supply (PS) thereto.

7. Method according to claim 5, **characterized in that** if a plurality of power request signals (PF0/3) are received for the circuits (TL0/3) when the sensed temperature is below a first predetermined temperature value (110°C), the power feeders (PC0/3) associated to the circuits and corresponding to the received power request signals couple said power supply (PS) to said circuits in a predetermined sequence.

8. Method according to claim 7, **characterized in that** said predetermined sequence is given by a priority list.

9. Method according to claim 6, **characterized in that** if a power request signal (PF0/3) is received for a circuit (TL0/3) when the sensed temperature is between said first predetermined temperature value (110°C) and a second predetermined temperature value (130°C), that is higher than said first predetermined temperature value, said power request signal (PF0/3) is ignored whereby said power supply (PS) is not coupled to the circuit corresponding to the received power request signal.

10. Method according to claim 9, **characterized in that** if a power request signal (PF0/3) is received for a circuit (TL0/3) when the sensed temperature is between said second predetermined temperature value (130°C) and a third predetermined temperature value (160°C), that is higher than said second predetermined temperature value, said power request signal (PF0/3) is ignored whereby said power supply (PS) is not coupled to the circuit corresponding to the received power request signal, and the circuits (TL0/3) for which an over-current is sensed (IS0-3) are disconnected from said power supply (PS) under the control of their associated power feeder (PC0/3).

11. Method according to claim 10, **characterized in that** if the sensed temperature is higher than said third predetermined temperature value (160°C), any power request signal (PF0/3) is ignored and all the circuits (TL0-3) are disconnected from said power supply (PS) under the control of their associated power feeder (PC0-3).

12. Method according to any of the claims 5 to 11, **characterized in that** a status signal (NACK0/3) indicating whether a circuit (TL0/3) is coupled to said power supply (PS) is provided, said status signal is set (NACK0/3 = 1) when a power request signal (PF0/3) is received for said circuit (TL0/3), and is reset (NACK0/3 = 0) when said power supply (PS) is coupled to said circuit.

## Patentansprüche

1. Stromzuführungs-Steuerungs-Vorrichtung (PFC, TS, ISO-3, PC0-3), die einer Vielzahl von Schaltkreisen (TL0-3) zugeordnet ist, die mit Strom zu versorgen sind, wobei die Vorrichtung eine Vielzahl von Stromzuführungen (PC0-3) enthält, von denen jede so angepasst ist, dass sie eine Stromversorgung (PS) mit einem einzelnen der Schaltkreise koppelt, was durch ein Stromversorgungs-Anforderungs-Signal gesteuert wird, das an einem Stromversorgungs-Anforderungs-Eingang (PF0/3) der Vorrichtung empfangen wird,
**dadurch gekennzeichnet, dass** die Stromzuführungs-Steuerungs-Vorrichtung (PFC, TS, IS0-3, PC0-3) weiterhin folgendes enthält:
- Einen Temperatursensor (TS), der so angepasst ist, dass er die Temperatur der Schaltkreise misst und ein entsprechendes Temperatur-Steuersignal liefert.
- Eine Vielzahl von Überstrom-Sensoren (IS0-3), von denen jeder mit einem einzelnen der Schaltkreise gekoppelt und so angepasst ist, dass er einen Überstrom misst, der durch den Schaltkreis (TL0/3) fließt, und ein entsprechendes Überstrom-Steuersignal liefert; und
- Eine Stromversorgungs-Steuerung (PFC), die Stromversorgungs-Anforderungs-Eingänge (PF0/3) zum Empfang der Stromversorgungs-Anforderungs-Signale hat, einen Temperatur-Steuereingang (TC), der an den Temperatursensor (TS) angeschlossen ist, um das Temperatur-Steuersignal zu empfangen, eine Vielzahl von Überstrom-Steuereingängen (CI0-3), die an die Überstrom-Sensoren (IS0-3) angeschlossen sind, um die Überstrom-Steuersignale zu empfangen, und eine Vielzahl von Stromversorgungs-Anforderungs-Ausgängen (CO0-3), die an die Stromzuführungen (PC0-3) angeschlossen sind, um Stromversorgungs-Steuersignale dorthin zu übertragen,
wobei die Stromversorgungs-Steuerung (PFC) so angepasst ist, dass sie die Stromversorgungs-Steuersignale gesteuert durch die Stromversorgungs-Anforderungs-Signale, das Temperatur-Steuersignal und die Überstrom-Steuersignale an die entsprechenden Stromzuführungen liefert.

2. Stromzuführungs-Steuerungs-Vorrichtung gemäß Anspruch 1, **dadurch gekennzeichnet, dass** der Temperatursensor (TS) so angepasst ist, eine erste (110°C), eine zweite (130°C) und eine dritte (160°C) vorher festgelegte Temperatur zu erkennen, die einem ersten, zweiten und einem dritten Wert des Temperatur-Steuersignals entspricht.

3. Stromzuführungs-Steuerungs-Vorrichtung gemäß Anspruch 1, **dadurch gekennzeichnet, dass** die Stromzuführungs-Steuerung (PFC) eine Vielzahl von Status-Ausgängen (NACK0-3) hat, an denen Status-Signale geliefert werden, die den Stromversorgungs-Status der entsprechenden Schaltkreise (TL0-3) anzeigen.

4. Stromzuführungs-Steuerungs-Vorrichtung gemäß Anspruch 1, **dadurch gekennzeichnet, dass** die Vorrichtung (PFC, TS, IS0-3, PC0-3) und die Schaltkreise (TL0-3) in den selben elektronischen Chip integriert sind.

5. Verfahren zur Stromversorgung einer Vielzahl von Schaltkreisen (TL0-3), von denen jeder einer Stromzuführung (PC0-3) zugeordnet ist, die so angepasst ist, dass sie eine Stromversorgung (PS) gesteuert durch ein Stromversorgungs-Anforderungs-Signal (PF0-3) mit dem zugeordneten Schaltkreis (TL0-3) verbindet, wobei die Schaltkreise der Reihe nach versorgt werden, wenn mehrere Stromversorgungs-Anforderungs-Signale gleichzeitig angelegt werden,
**dadurch gekennzeichnet, dass** die Temperatur der Schaltkreise (TL0-3) gemessen (TS) und zur Steuerung des Betriebs der Stromzuführungen (PC0-3) verwendet wird,
und dadurch, dass ein durch die Schaltkreise (TL0-3) fließender Überstrom gemessen (IS0-3) und zur weiteren Steuerung der Stromzuführungen verwendet wird.

6. Verfahren gemäß Anspruch 5, **dadurch gekennzeichnet, dass** wenn ein Stromversorgungs-Anforderungs-Signal (PF0/3) für einen Schaltkreis (TL0-3) empfangen wird, wenn die gemessene Temperatur unter einem ersten vorher festgelegten Wert (110°C) liegt, die dem Schaltkreis zugeordnete und dem empfangenen Stromversorgungs-Anforderungs-Signal entsprechende Stromzuführung (PC0/3) die Stromversorgung (PS) mit dem Schaltkreis koppelt.

7. Verfahren gemäß Anspruch 5, **dadurch gekennzeichnet, dass**, wenn eine Vielzahl von Stromversorgungs-Anforderungs-Signalen (PF0/3) für die Schaltkreise (TL0/3) empfangen wird, wenn die gemessene Temperatur unter einem ersten vorher festgelegten Wert (110°C) liegt, die den Schaltkreisen zugeordneten und den empfangenen Stromversorgungs-Anforderungs-Signalen entsprechenden Stromzuführungen (PC0/3) die Stromversorgung (PS) in einer vorher festgelegten Reihenfolge mit dem Schaltkreis koppeln.

8. Verfahren gemäß Anspruch 7, **dadurch gekennzeichnet, dass** die vorher festgelegte Reihenfolge durch eine Prioritätsliste gegeben ist.

9. Verfahren gemäß Anspruch 6, **dadurch gekennzeichnet, dass**, wenn ein Stromversorgungs-Anforderungs-Signal (PF0/3) für einen Schaltkreis (TL0/3) empfangen wird, wenn die gemessene Temperatur zwischen einem ersten vorher festgelegten Temperaturwert (110°C) und einem zweiten vorher festgelegten Temperaturwert (130°C) liegt, der größer als der erste vorher festgelegte Temperaturwert ist, das Stromversorgungs-Anforderungs-Signal (PF0/3) ignoriert wird, so dass die Stromversorgung (PS) nicht mit dem Schaltkreis verbunden wird, der dem empfangenen Stromversorgungs-Anforderungs-Signal entspricht.

10. Verfahren gemäß Anspruch 9, **dadurch gekennzeichnet, dass**, wenn ein Stromversorgungs-Anforderungs-Signal (PF0/3) für einen Schaltkreis (TL0/3) empfangen wird, wenn die gemessene Temperatur zwischen dem zweiten vorher festgelegten Temperaturwert (130°C) und einem dritten vorher festgelegten Temperaturwert (160°C) liegt, der größer als der zweite vorher festgelegte Temperaturwert ist, das Stromversorgungs-Anforderungs-Signal (PF0/3) ignoriert wird, so dass die Stromversorgung (PS) nicht mit dem Schaltkreis verbunden wird, der dem empfangenen Stromversorgungs-Anforderungs-Signal entspricht, und die Schaltkreise (TL0/3), für die ein Überstrom gemessen wird (IS0-3), gesteuert durch ihre zugehörige Stromzuführung (PC0/3) von der Stromversorgung (PS) getrennt werden.

11. Verfahren gemäß Anspruch 10, **dadurch gekennzeichnet, dass**, wenn die gemessene Temperatur größer als der dritte vorher festgelegte Temperaturwert (160°C) ist, alle Stromversorgungs-Anforderungs-Signale (PF0/3) ignoriert werden und alle Schaltkreise (TL0/3) gesteuert durch ihre zugehörige Stromzuführung (PC0/3) von der Stromversorgung (PS) getrennt werden.

12. Verfahren gemäß einem beliebigen der Ansprüche 5 bis 11, **dadurch gekennzeichnet, dass** ein Status-Signal (NACK0/3) bereitgestellt wird, das anzeigt, ob ein Schaltkreis (TL0/3) mit der Stromversorgung (PS) gekoppelt ist, wobei das Status-Signal gesetzt wird (NACK0/3 = 1), wenn ein Stromversorgungs-Anforderungs-Signal (PF0/3) für den Schaltkreis (TL0/3) empfangen wird, und zurückgesetzt wird (NACK0/3 = 0), wenn die Stromversorgung (PS) an den Schaltkreis gekoppelt wird.

## Revendications

1. Agencement de contrôle de puissance (PFC, TS, IS0-3, PC0-3) associé à une pluralité de circuits (TL0-3) devant être alimentés, ledit agencement comprenant une pluralité de dispositifs d'alimentation (PC0-3) adaptés chacun pour coupler une alimentation (PS) à l'un distinct desdits circuits sous le contrôle d'un signal de demande de puissance reçu au niveau d'une entrée de demande de puissance (PF0/3) dudit agencement,
**caractérisé en ce que** ledit agencement de contrôle de puissance (PFC, TS, IS0-3, PC0-3) comprend en outre :
- un capteur de température (TS) adapté pour détecter la température des circuits et pour délivrer en conséquence un signal de contrôle de température ;
- une pluralité de capteurs de surintensité (IS0-3), couplés chacun à l'un distinct desdits circuits et adaptés pour détecter une surintensité dans ledit circuit (TL0/3) et pour délivrer en conséquence un signal de contrôle de surintensité ; et
- un contrôleur d'alimentation (PFC) comportant lesdites entrées de demande de puissance (PF0/3) pour recevoir lesdits signaux de demande de puissance, une entrée de contrôle de température (TC) connectée audit capteur de température (TS) pour recevoir ledit signal de contrôle de température, une pluralité d'entrées de contrôle de surintensité (CI0-3) connectées auxdits capteurs de surintensité (IS0-3) pour recevoir les signaux de contrôle de surintensité et une pluralité de sorties de demande de puissance (C00-3) connectées auxdits dispositifs d'alimentation (PC0-3) pour transmettre à ceux-ci des signaux de contrôle de puissance,
ledit contrôleur d'alimentation (PFC) étant adapté pour fournir lesdits signaux de contrôle de puissance aux dispositifs d'alimentation correspondants sous le contrôle des signaux de demande de puissance, du signal de contrôle de température et des signaux de contrôle de surintensité.

2. Agencement de contrôle de puissance selon la revendication 1, **caractérisé en ce que** ledit capteur de température (TS) est adapté pour détecter une première (110°C), une deuxième (130°C) et une troisième (160°C) températures prédéterminées correspondant à une première, une deuxième et une troisième valeurs dudit signal de contrôle de température.

3. Agencement de contrôle de puissance selon la revendication 1, **caractérisé en ce que** ledit contrôleur d'alimentation (PFC) comporte une pluralité de sorties d'état (NACK0-3) auxquelles sont délivrés des signaux d'état indicatifs de l'état d'alimentation de circuits correspondants parmi lesdits circuits (TL0-3).

4. Agencement de contrôle de puissance selon la revendication 1, **caractérisé en ce que** ledit agencement (PFC, TS, IS0-3, PC0-3) et lesdits circuits (TL0-3) sont intégrés dans un même composant électronique.

5. Procédé pour alimenter une pluralité de circuits (TL0-3) associés chacun à un dispositif d'alimentation (PC0/3) adapté pour coupler une alimentation (PS) à son circuit (TL0/3) associé sous le contrôle d'un signal de demande de puissance (PF0/3), les circuits étant alimentés dans l'ordre lorsque plusieurs signaux de demande de puissance sont délivrés simultanément,
**caractérisé en ce que** la température des circuits (TL0-3) est détectée (TS) et est utilisée pour contrôler le fonctionnement desdits dispositifs d'alimentation (PC0-3),
et **en ce que** toute surintensité dans lesdits circuits (TL0-3) est détectée (IS0-3) et est utilisée pour contrôler davantage lesdits dispositifs d'alimentation.

6. Procédé selon la revendication 5, **caractérisé en ce que**, si un signal de demande de puissance (PF0/3) est reçu pour un circuit (TL0/3) lorsque la température détectée est inférieure à une première valeur de température prédéterminée (110°C), le dispositif d'alimentation (PC0/3) associé audit circuit et correspondant au signal de demande de puissance reçu couple ladite alimentation (PS) à celui-ci.

7. Procédé selon la revendication 5, **caractérisé en ce que**, si une pluralité de signaux de demande de puissance (PF0/3) sont reçus pour les circuits (TL0/3) lorsque la température détectée est inférieure à une première valeur de température prédéterminée (110°C), les dispositifs d'alimentation (PC0/3) associés aux circuits et correspondant aux signaux de demande de puissance reçus couplent ladite alimentation (PS) auxdits circuits dans un ordre prédéterminé.

8. Procédé selon la revendication 7, **caractérisé en ce que** ledit ordre prédéterminé est donné par une liste de priorités.

9. Procédé selon la revendication 6, **caractérisé en ce que**, si un signal de demande de puissance (PF0/3) est reçu pour un circuit (TL0/3) lorsque la température détectée est située entre ladite première valeur de température prédéterminée (110°C) et une deuxième valeur de température prédéterminée (130°C), qui est supérieure à ladite première valeur de température prédéterminée, ledit signal de demande de puissance (PF0/3) est ignoré, moyennant quoi ladite alimentation (PS) n'est pas couplée au circuit correspondant au signal de demande de puissance reçu.

10. Procédé selon la revendication 9, **caractérisé en ce que**, si un signal de demande de puissance (PF0/3) est reçu pour un circuit (TL0/3) lorsque la température détectée est située entre ladite deuxième valeur de température prédéterminée (130°C) et une troisième valeur de température prédéterminée (160°C), qui est supérieure à ladite deuxième valeur de température prédéterminée, ledit signal de demande de puissance (PF0/3) est ignoré, moyennant quoi ladite alimentation (PS) n'est pas couplée au circuit correspondant au signal de demande de puissance reçu, et les circuits (TL0/3) pour lesquels une surintensité est détectée (IS0-3) sont déconnectés de ladite alimentation (PS) sous le contrôle de leurs dispositifs d'alimentation (PC0/3) associés.

11. Procédé selon la revendication 10, **caractérisé en ce que**, si la température détectée est supérieure à ladite troisième valeur de température prédéterminée (160°C), tout signal de demande de puissance (PF0/3) est ignoré et tous les circuits (TL0-3) sont déconnectés de ladite alimentation (PS) sous le contrôle de leurs dispositifs d'alimentation (PC0-3) associés.

12. Procédé selon l'une quelconque des revendication 5 à 11, **caractérisé en ce qu'**un signal d'état (NACK0/3) indiquant si un circuit (TL0/3) est couplé à ladite alimentation (PS) est fourni, ledit signal d'état est positionné (NACK0/3 = 1) lorsqu'un signal de demande de puissance (PF0/3) est reçu pour ledit circuit (TL0/3) et est réinitialisé (NACK0/3 = 0) lorsque ladite alimentation (PS) est couplée audit circuit.
